# EUROPEAN PATENT SPECIFICATION

(11) **EP 1 124 722 B1**
(45) Date of publication and mention of the grant of the patent: **18.12.2002**
(21) Application number: 98957448.8
(22) Date of filing: 30.10.1998
(51) Int. Cl.: B65B 27/06, B29D 30/48

(54) **APPARATUS FOR BUNDLING LAYERED MATERIAL**
VORRICHTUNG ZUM BÜNDELN VON EINEM MEHRSCHICHTIGEN MATERIAL
APPAREIL POUR METTRE EN FAISCEAU UN MATERIAU STRATIFIE

(43) Date of publication of application: 22.08.2001
(73) Proprietor: The Goodyear Tire & Rubber Company, Akron, Ohio 44316-0001 (US)
(72) Inventor: GOLIGHTLY, Ralph, Wayne, Gadsden, AL 35901 (US)
(74) Representative: Leitz, Paul
(86) International application number: US9823106
(87) International publication number: WO00026087

(56) References cited:
- EP-A- 0 320 221
- US-A- 3 768 397
- US-A- 5 141 033
- US-A- 5 560 187

## Description

The invention relates to an apparatus for bundling layered material. In a specific application, the invention may be used to staple the end wire in the bead of a pneumatic tire.

### Background Art

When a wire wound tire bead is made, the turn of wire that is wound last, or the end wire, is loose, and is not supported by the bead, or by any other means. Because of spring in the wire, the end wire tends to straighten and separate itself from the annular configuration of the bead, or tends to move laterally away from the bundle in the curing process. In order to prevent non-uniformities in the tire, or damage to the tire caused by the loose end wire, prior art beads are wrapped with tape, wire, synthetic cord, or stapled to hold the end wire tight to the annular configuration of the bead. This step in bead construction consumes material and labor, is labor intensive in the cases where the bead is wrapped.

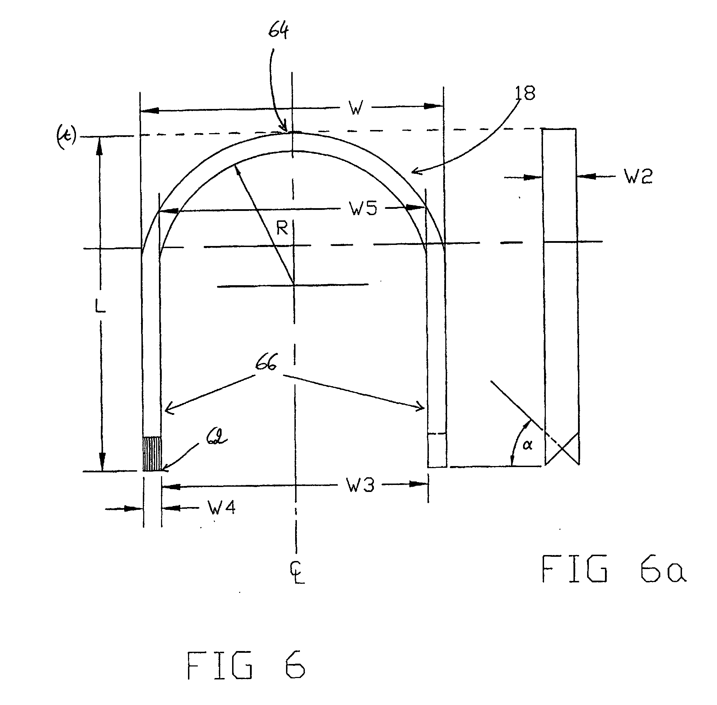

U.S. Patent 5,141,033, issued August 25, 1992, relates to rubberless tire bead assemblies comprising either a single wire or a plurality of convolutions of wire or multiple wire elements. The patent discusses the formation of individual bead structures. At col. 4, lines 6-10, it is taught that the wires may be welded or otherwise bonded together, and at lines 18-30, optional use of metal clips, metal wires, spring clips and spiral wraps, spot soldering, brazing, gluing, fusible polymeric material, is disclosed for this purpose. At col. 5, lines 47-64, the "preformed" metal clips and other options for holding the wires in the bead bundle are again discussed, with reference to use at the bead forming drum. At Figs. 6 and 9, application of a preformed clip is shown using a crimping type device. (See also col. 12, lines 6-16).

Applicant is aware that stapled tire beads are in the art or are described in the art, but applicant has no knowledge of the apparatus or the methods used to prepare such prior art beads.

It is an object of the invention to provide an apparatus of reducing material consumption and reduce the labor involved in building beads for pneumatic tires. Other objects of the invention will be apparent from the following description and claims.

### Disclosure of Invention

An apparatus for bundling of multi-layered material comprises (a) an anvil with a specific shape for containing multi-layered material in a specific configuration, (b) tying means for tying the multi-layered material in a bundle, the tying means being stored on the apparatus in proximity to the anvil, (c) at least one blade in the proximity of the anvil, the at least one blade having a specific shape that together with the shape of the anvil accommodates the shape of the bundle, the at least one blade and the anvil being movable relative to one another, wherein the tying means is disposed between the at least one blade and the anvil, and (d) means for activating the apparatus such that the anvil and at least one blade come together to confine the multi-layered material, while the tying means is simultaneously pressed between the anvil and the at least one blade and around the layered material.

In the illustrated embodiment, the movements of the apparatus are controlled by pneumatic logic. The movements of the apparatus may also be controlled by a computer.

The multi-layered material may be loaded on the apparatus and bundled material may be removed from the apparatus manually or by using automated equipment.

The anvil has a plurality of trough shaped areas for containing the multi-layered material, each of the trough shaped areas comprising an arc shape, having a diameter of 0.762 to 2.03 cm (0.3 to 0.8 inches), which are adapted to be used in conjunction with a blade having a notched end, each notched end having an arc shape and a diameter of 0.254 to 2.03 cm (0.1 to 0.8 inches). The means for activating the apparatus is a pneumatic cylinder which provides compressed air for moving the anvil and the blades into proximity to one another, and for compressing the tying means onto the multi-layered material.

In the illustrated embodiment, the tying means is a horseshoe shaped wire staple. The staples are contained on the apparatus in a guide under constant tension, whereby when a blade is withdrawn from the proximity of the anvil and past the staples, the tension causes a staple to move between the blade and the anvil. The tension is provided by free weights attached to a cable, the cable being strung through a center of a plurality of staples and attached to a stop contact adjacent the last staple in the guide.

A guide bar is provided above the staples to partially control the movement of a staple into position between the anvil and the blade.

More specifically, the illustrated apparatus is used for stapling tire beads and comprises (a) an anvil for receiving a plurality of beads, (b) a plurality of blades in the proximity of the anvil, the anvil and plurality of blades being movable relative to one another, (c) tying means disposed between the anvil and the plurality of blades, and (d) means for activating the apparatus such that the anvil and plurality of blades come together to confine a plurality of tire beads in a specific configuration, while the tying means is simultaneously pressed between the anvil and the plurality of blades and around the beads.

### Brief Description of Drawings

Fig. 1 illustrates a left side view of the apparatus of the invention.
Fig. 2 illustrates a front view of the apparatus in an open position.
Fig. 3 illustrates a right side view of the apparatus in an open position.
Fig. 4 illustrates a single blade used in the apparatus.
Fig. 5 illustrates an anvil with multiple arced positions for receiving layered material.
Figs. 6 and 6a illustrate a horseshoe shaped staple used in the apparatus of the invention.
Fig. 7 illustrates a stapled tire bead.
Fig. 8 illustrates a top view of a guide for holding staples in the apparatus of the invention.

### Detailed Description of the Invention

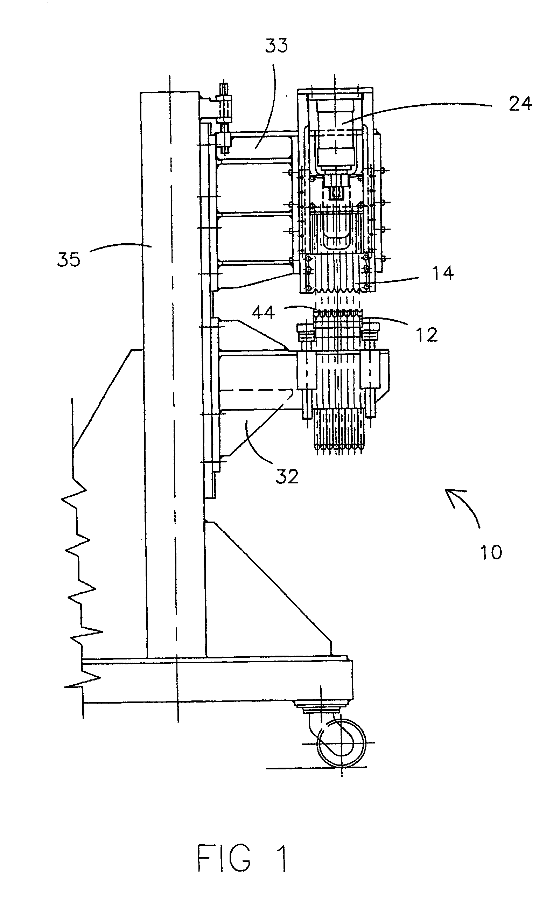

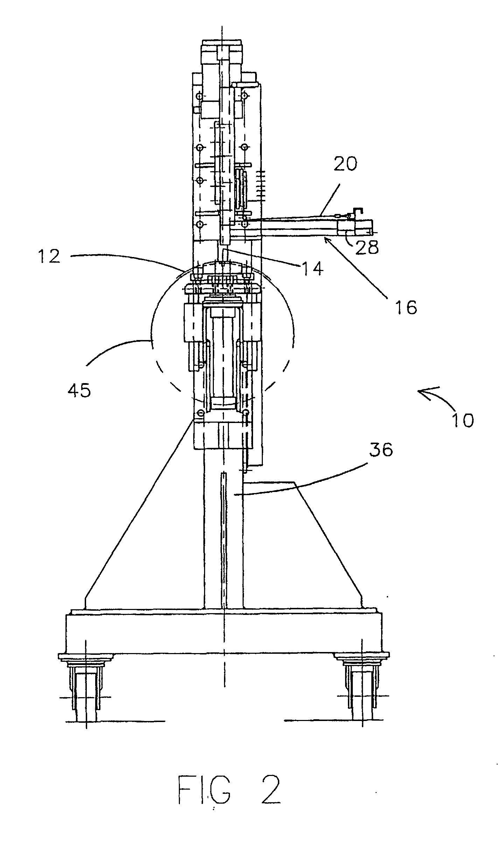

With reference now to Figs. 1, 2 and 3, the left side, front, and right side of the apparatus (10) respectively are illustrated. The view illustrated in Fig. 2 is designated as the front side since this will be the view seen by the operator when the apparatus is operated manually.

The apparatus (10) comprises an anvil (12) which has a plurality of receiving areas (44) for receiving a layered material therein. The apparatus of the invention is particularly useful for handling bulk materials and confining said materials into a package having a particular shape or orientation. In the illustrated embodiment, anvil (12) has 8 receiving auras (44) which are shaped to receive a tire bead and are substantially rounded. Those skilled in the art will recognize that any convenient number of receiving areas (44) may be used in an anvil (12) of the apparatus and that any shape receiving area can be used, and the shape of the receiving area may be dictated by the nature of the layered material which is to be placed in the receiving area to be bundled.

The anvil (12) is connected to the apparatus (10) through support (32) which is attached to the base (36) of apparatus (10). In close association with anvil (12) on the apparatus are blades (14). Blades (14) are attached to support (33) which is attached to base (36) of the apparatus (10). Either or both of support (32) and (33) may be slideable on base (36) so that the gap between blades (14) and anvil (12) may be opened and closed as the apparatus is operated.

The movement of either support (33) or (32) or both on base (36) is initiated by pneumatic forces. The machine may be equipped with pneumatic control, or the pneumatic forces may be controlled by a computer.

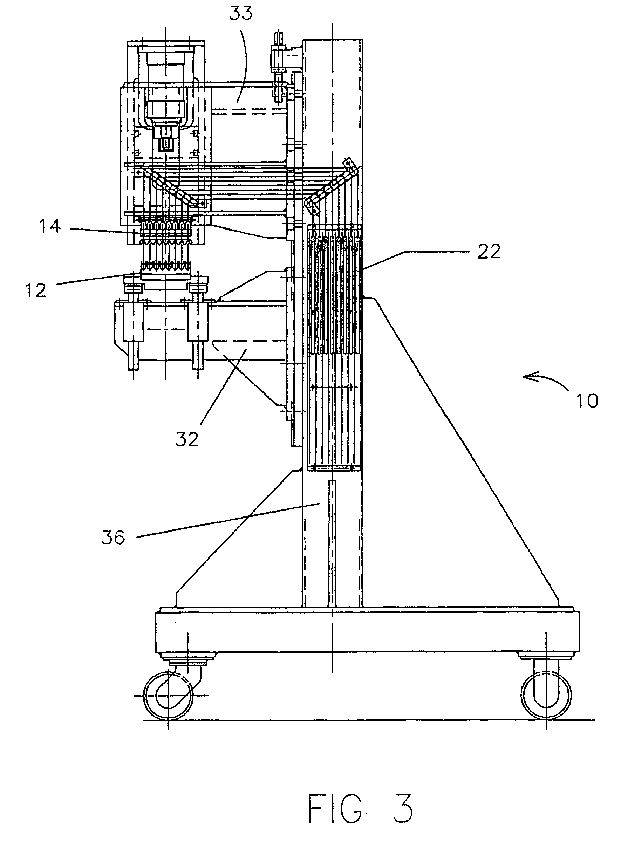

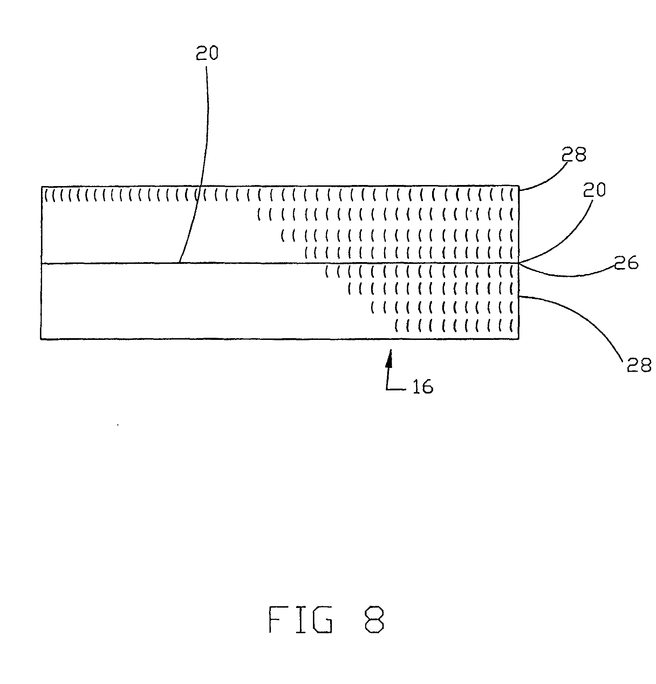

With reference specifically to Fig. 2 and Fig. 8, a guide (16) may be associated with the apparatus for containing tying means which are used to tie together the layers of material that are placed in the apparatus. In the illustrated embodiment, the tying means are horseshoe shaped staples (18) (see Fig. 6). Cable (20) is attached to a sheet metal bar (28), at center (26), at the end of the rows of staples in the guide (16), and is also attached to weights (22) (see Fig. 3) which provide a constant tension on the staples (18) in the guide (16). Sheet metal bar (28) applies a substantially even pressure to each of the rows of staples and helps assure that a staple is locked in each row when the apparatus is activated.

In the operation of apparatus (10), air cylinder (24) provides a pneumatic force for bringing blades (14) together with anvil (12), whereby bundled material placed in the receiving areas (44) of anvil (12) is pressed between anvil (12) and blades (14). One set of staples (18) are positioned between anvil (12) and blades (14), and when the anvil (12) and blades (14) are brought together, are trapped between anvil (12) and blades (14), and forced around the bundled material in the shape of receiving means (44) in anvil (12). After the bundled material is tied together by compression of blades (14) on anvil (12), the machine is activated to separate or open the gap between anvil (12) and blades (14). As blades (14) are raised above the level of staple guide (16), the tension from weights (22) applied to cable (20) forces another set of staples into position between anvil (12) and blades (14).

To control the rows of staples (18) in the guide (16), i.e., to prevent the rising up of staples (18) as they are pushed forward, a 1.27 to 1.91 cm (0.5 to 0.75 inch) sheet metal guide (not shown) is provided above the staples to prevent their rising out of alignment at the point where the staples are loaded for compression between blades (14) and anvil (12).

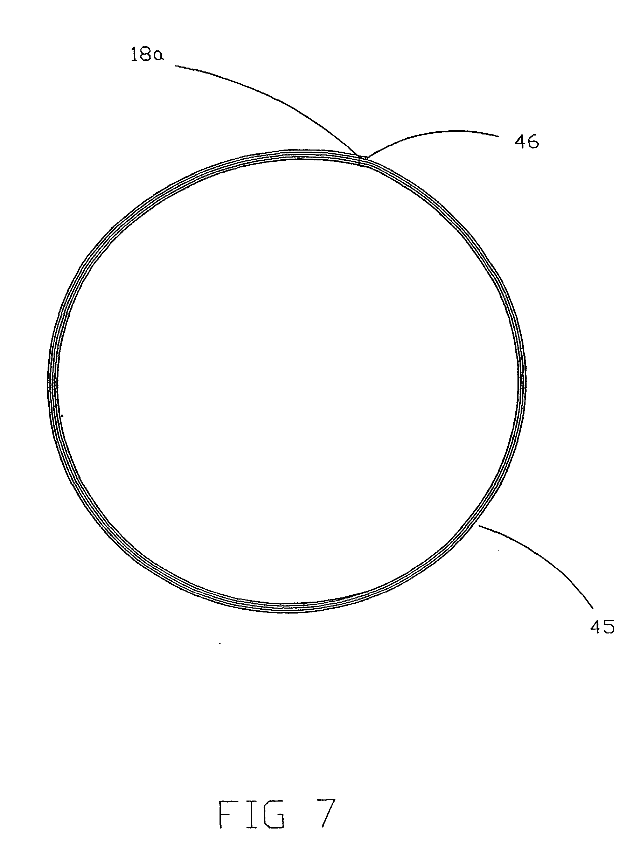

In the operation of the apparatus of the illustrated embodiment, a plurality of tire beads (45), which may be simultaneously manufactured are placed on anvil (12) and are spaced so that one tire bead occupies each receiving area (44) of anvil (12). The beads are oriented so that the end wire (46) (see Fig. 7) is aligned with blades (14). When the apparatus is activated so that anvil (12) and blades (14) come together, blades (14) push a set of staples (18) downward toward anvil (12), wherein continued closing of the gap between blades (14) and anvil (12) force the staples to bend around receiving area (44) and to compress on to the beads.

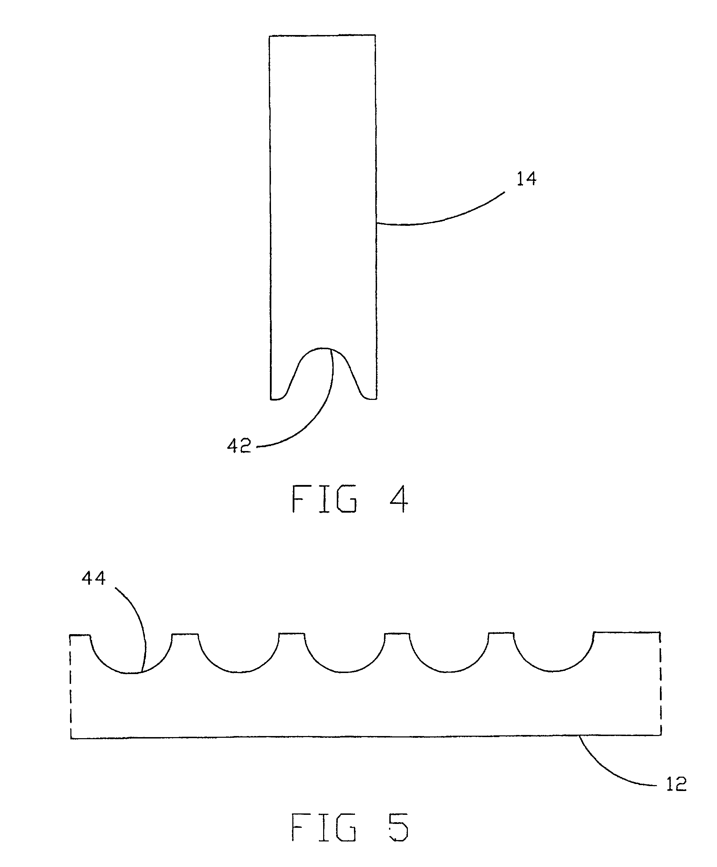

With reference to Fig. 4, blades (14) are fabricated individually with an arced end (42) which is specifically adapted for the particular material which is being bundled. It has been found that different arcs (42) can be used in blade (14) for different sizes of tire beads, and that a small arc can be used on many different sizes of tire beads. The arc of the blade may be minimal and in one embodiment represents a radius of the "V" of an otherwise V-shaped end (42) of blade (14).

Those skilled in the art will recognize that blades (14) may be constructed in one unit having arcs (42) of sufficient number to match the plurality of receiving areas (44) in an anvil (12).

With reference to Fig. 5, anvil (12) may be made from a single block of material, preferably steel of sufficient width to accommodate the number of receiving areas (44) desired. Although the illustrated apparatus has 8 such receiving areas, the anvil (12) may be made with any convenient number of receiving areas (44).

Staples (18) are made of conventional staple wires that are contoured to have a horseshoe shape (see Fig. 6). The horseshoe shape of staple (18) facilitates the shaping of the staple between the arced end (42) of blade (14) and receiving area (44) of anvil (12). When staples having a conventional squared shape are used, there is a tendency for the apparatus to crush the top of the staple and kink the legs at the angle of the bend. The horseshoe shape reduces the fatigue exposure of the staple.

In the illustrated embodiment, staple (18) has a length (L) of about 1.52 cm (0.6 inch), (L) being the distance from leg end (62) to a line (t) tangent to the top arch (64). The width (w) of staple (18) is about 1.27 cm (0.5 inch). The width (w₃) between the legs (66) of staple (18) is about 1.14 cm (0.45 inch) and (w₃) may be slightly more than or slightly less than (w₅), which is the width of the arch (64). Arch (64) has a radius (R) of about 0.584 cm (0.23 inch).

The staples are made from flat wire and have a width (w₄) of about 0.076 cm (0.03 inch) and width (w₂) of about 0.151 cm (0.06 inch). The leg ends (62) may be cut on an angle and may have an angle α of about 45° with a plane containing both leg ends (62) of a staple (18).

The apparatus may be operated manually whereby the operator places a plurality of tire beads on anvil (12) in the proper position, then activates the apparatus by pressing safety switches, one with each hand, so that the hands are clear of the closing blades (14) and anvil (12). When the bundled material is tied together by the staples, and the gap between blades (14) and anvil (12) opens, the operator removes the completed material and prepares the apparatus for the next operation.

Those skilled in the art will recognize that this procedure may be automated, for example by the use of a robot, or robotic attachments to the apparatus.

When pneumatic control is used in the apparatus, a series of pneumatic stops are used wherein the movement of the apparatus provides activation required for each subsequent movement of the apparatus. Similarly, when computer control of the apparatus is used, electronic sensors are provided on the apparatus which provide information to the computer as to the position of each of the moving parts of the apparatus, and the software of the computer is used to activate the apparatus at each position. Such machine controls are well known to those skilled in the art.

While the invention has been variously illustrated and described, those skilled in the art will recognize that the invention may be variously modified and practiced without departing from the scope of the invention which is limited by the following claims.

## Claims

1. An apparatus (10) for bundling of multi-layered material, said apparatus comprising:
(a) an anvil (12) with a specific shape for containing multi-layered material (45) in a specific configuration,
(b) tying means for tying said multi-layered material in a bundle, said tying means being stored on the apparatus in proximity to said anvil (12),
(c) at least one blade (14) in the proximity of said anvil, said at least one blade having a specific shape that together with the shape of the anvil (12) accommodates the shape of said bundle, said at least one blade and said anvil being movable relative to one another, wherein said tying means is disposed between said at least one blade and said anvil, and
(d) means for activating said apparatus such that the anvil (12) and at least one blade (14) come together to confine the multi-layered material, while said tying means is simultaneously pressed between said anvil and said at least one blade and around said layered material,
**characterized in that** said anvil (12) has a plurality of trough shaped areas (44) for containing said multi-layered material, each said area comprising an arced shape having a diameter of 0.762 to 2.03 cm (0.3 to 0.8 inches), which are adapted to be used in conjunction with a blade (14) having a notched end (42), each notched end having an arced shape and a diameter of 0.254 to 2.03 cm (0.1 to 0.8 inches).

2. The apparatus of claim 1 **characterized in that** said tying means is a horseshoe shaped wire staple (18).

3. The apparatus of claim 1 **characterized in that** said staples (18) are contained on said apparatus in a guide under constant tension, whereby when a blade is withdrawn from the proximity of the anvil (12) and past the staples, said tension causes a staple to move between the blade and the anvil.

4. The apparatus of claim 2 **characterized in that** said tension is provided by free weights attached to a cable, said cable being strung through a center of a plurality of staples and attached to a stop contact adjacent the last staple in said guide.

5. The apparatus of claim 2 **characterized in that** a guide bar is provided above said staples (18) to partially control the movement of a staple into position between said anvil and said blade.

6. The apparatus of claim 1 **characterized in that** the means for activating said apparatus is a pneumatic cylinder (24) which provides compressed air for moving said anvil (12) and said blades (14) into proximity to one another and for compressing said tying means onto said multi-layered material (45).

7. The apparatus of claim 1 **characterized in that** the movements of said apparatus (10) are controlled by pneumatic logic.

8. The apparatus of claim 1 **characterized in that** the movements of said apparatus (10) are controlled by a computer.

## Patentansprüche

1. Vorrichtung (10) zum Bündeln mehrschichtigen Materials, wobei die Vorrichtung umfasst:
(a) einen Amboss (12) mit einer speziellen Form, um mehrschichtiges Material (45) in einer speziellen Gestalt aufzunehmen,
(b) ein Festziehmittel zum Festziehen des mehrschichtigen Materials zu einem Bündel, wobei das Festziehmittel auf der Vorrichtung in der Nähe des Ambosses (12) gespeichert ist,
(c) mindestens eine Klinge (14) in der Nähe des Ambosses, wobei die mindestens eine Klinge eine spezielle Form aufweist, die zusammen mit der Form des Ambosses (12) an die Form des Bündels angepasst ist, wobei die mindestens eine Klinge und der Amboss relativ zueinander bewegbar sind, wobei das Festziehmittel zwischen der mindestens einen Klinge und dem Amboss angeordnet ist, und
(d) ein Mittel zum Aktivieren der Vorrichtung, so dass der Amboss (12) und die mindestens eine Klinge (14) zusammenkommen, um das mehrschichtige Material einzuschnüren, während das Festziehmittel gleichzeitig zwischen dem Amboss und der mindestens einen Klinge und um das geschichtete Material herum gepresst wird,
**dadurch gekennzeichnet,**
**dass** der Amboss (12) eine Vielzahl von muldenförmigen Bereichen (44) zur Aufnahme des mehrschichtigen Materials aufweist, wobei jeder Bereich eine Bogenform umfasst, die einen Durchmesser von 0,762 bis 2,03 cm (0,3 bis 0,8 Zoll) aufweist, die derart angepasst sind, dass sie in Verbindung mit einer Klinge (14) verwendet werden, die ein mit einer Kerbe versehenes Ende (42) aufweist, wobei jedes mit einer Kerbe versehene Ende eine Bogenform und einen Durchmesser von 0,254 bis 2,03 cm (0,1 bis 0,8 Zoll) aufweist.

2. Vorrichtung nach Anspruch 1, **dadurch gekennzeichnet, dass** das Festziehmittel eine hufeisenförmige Drahtheftklammer (18) ist.

3. Vorrichtung nach Anspruch 1, **dadurch gekennzeichnet, dass** die Heftklammern (18) an der Vorrichtung in einer Führung unter konstanter Spannung gehalten sind, wodurch, wenn eine Klinge aus der Nähe des Ambosses (12) und an den Heftklammern vorbei zurückgezogen wird, die Spannung bewirkt, dass sich eine Heftklammer zwischen die Klinge und den Amboss bewegt.

4. Vorrichtung nach Anspruch 2, **dadurch gekennzeichnet, dass** die Spannung durch freie Gewichte bereitgestellt wird, die an einem Kabel angebracht sind, wobei das Kabel durch die Mitte einer Vielzahl von Heftklammern geschlungen und an einem Anschlagkontakt neben der letzten Heftklammer in der Führung angebracht ist.

5. Vorrichtung nach Anspruch 2, **dadurch gekennzeichnet, dass** ein Führungsstab oberhalb der Heftklammern (18) vorgesehen ist, um die Bewegung einer Heftklammer in Position zwischen dem Amboss und die Klinge teilweise zu steuern.

6. Vorrichtung nach Anspruch 1, **dadurch gekennzeichnet, dass** das Mittel zum Aktivieren der Vorrichtung ein Druckluftzylinder (24) ist, der komprimierte Luft zum Bewegen des Ambosses (12) und der Klingen (14) in die Nähe zueinander und zum Drücken des Festziehmittels auf das mehrschichtige Material (45) liefert.

7. Vorrichtung nach Anspruch 1, **dadurch gekennzeichnet, dass** die Bewegungen der Vorrichtung (10) von einer pneumatischen Logik gesteuert werden.

8. Vorrichtung nach Anspruch 1, **dadurch gekennzeichnet, dass** die Bewegungen der Vorrichtung (10) von einer pneumatischen Logik gesteuert werden.

## Revendications

1. Appareil (10) pour empaqueter une matière multicouche, ledit appareil comprenant :
(a) une enclume (12) possédant une forme spécifique pour contenir une matière multicouche (45) dans une configuration spécifique ;
(b) un moyen de liaison pour lier ladite matière multicouche afin d'obtenir un paquet, ledit moyen de liaison étant stocké sur l'appareil à proximité de ladite enclume (12) ;
(c) au moins une lame (14) à proximité de ladite enclume, ladite ou lesdites lames possédant une forme spécifique qui, en association avec la forme de l'enclume (12) épouse la forme dudit paquet, ladite ou lesdites lames et ladite enclume étant mobiles l'une par rapport à l'autre, dans lequel ledit moyen de liaison est disposé entre ladite ou lesdites lames et ladite enclume, et
(d) un moyen pour activer ledit appareil de telle sorte que l'enclume (12) et ladite ou lesdites lames (14) se rapprochent l'une de l'autre afin de confiner la matière multicouche, tandis que ledit moyen de liaison est pressé simultanément entre ladite enclume et ladite et lesdites lames et autour de ladite matière stratifiée, **caractérisé en ce que** ladite enclume (12) possède plusieurs zones (44) en forme d'auge pour contenir ladite matière multicouche, chacune desdites zones comprenant une forme arquée possédant un diamètre de 0,762 à 2,03 cm (de 0,3 à 0,8 pouce), qui sont conçues pour être utilisées en association avec une lame (14) comportant une extrémité (42) munie d'une encoche, chaque extrémité munie d'une encoche possédant une configuration arquée et un diamètre de 0,254 à 2,03 cm (de 0,1 à 0,8 pouce).

2. Appareil selon la revendication 1, **caractérisé en ce que** ledit moyen de liaison est un crampon en fil de fer (18) en forme de fer à cheval.

3. Appareil selon la revendication 1, **caractérisé en ce que** lesdits crampons en fil de fer (18) sont contenus sur ledit appareil dans un guide soumis à une tension constante, par lequel, lorsqu'une lame s'éloigne de l'enclume (12) et passe devant les crampons en fil de fer, ladite tension provoque le déplacement d'un crampon en fil de fer entre la lame et l'enclume.

4. Appareil selon la revendication 2, **caractérisé en ce que** ladite tension est fournie par des contrepoids fixés à un câble, ledit câble étant enfilé à travers le centre de plusieurs crampons en fil de fer et étant fixé à un contact d'arrêt en position adjacente au dernier crampon en fil de fer dans ledit guide.

5. Appareil selon la revendication 2, **caractérisé en ce qu'**on prévoit une barre de guidage au-dessus desdits crampons en fil de fer (18) afin de commander en partie le mouvement d'un crampon en fil de fer en position entre ladite enclume et ladite lame.

6. Appareil selon la revendication 1, **caractérisé en ce que** le moyen pour activer ledit appareil est un cylindre pneumatique (24) qui fournit de l'air comprimé pour rapprocher l'une de l'autre ladite enclume (12) et ladite ou lesdites lames (14) et pour comprimer ledit moyen de liaison sur ladite matière multicouche (45).

7. Appareil selon la revendication 1, **caractérisé en ce que** les mouvements dudit appareil (10) sont commandés par une logique pneumatique.

8. Appareil selon la revendication 1, **caractérisé en ce que** les mouvements dudit appareil (10) sont commandés par un ordinateur.
